# EUROPEAN PATENT APPLICATION

(11) **EP 3 825 746 A1**
(43) Date of publication of application: **26.05.2021**
(21) Application number: 20207474.6
(22) Date of filing: 13.11.2020
(51) Int. Cl.: G02B 6/44

(54) **TOOLLESS SPLITTER AND SPLICE TRAY ASSEMBLIES AND SYSTEMS**

(30) Priority: 22.11.2019 US 201962938981 P
(71) Applicant: Corning Research And Development Corporation, Corning, New York 14831 (US)
(72) Inventor: RUDA, Michal, 95-060 Brzeziny (PL)
(74) Representative: Sadler, Peter Frederick

(57) **Abstract**

Systems, assemblies, and methods for fiber optic management using a splitter and splice tray assembly (110), are provided herein. An example tray assembly (110) includes a tray and a toolless attachment feature (170) for mounting the tray to an equipment rack. The tray includes a top side (120), a bottom side (130), a front panel (140), and a rear side (160) with a splitter holding section. The top side (120) and bottom side (130) each include a splice section (150) and a patching section (146). The top side (120) and bottom side (130) may be symmetrical about a center plane normal to the front panel. The toolless attachment feature (170) may be configured to allow the tray to swivel about a vertical rail (102) of the equipment rack (100).

## Description

### PRIORITY APPLICATION

This application claims the benefit of priority of U.S. Provisional Application No. 62/938,981, filed on November 22, 2019, the content of which is relied upon and incorporated herein by reference in its entirety.

### FIELD OF THE DISCLOSURE

Embodiments of the present disclosure relate generally to network communications equipment and, more particularly, to splitter and splice tray assemblies and systems for fiber optic management, such as within communications equipment cabinets and enclosures.

### BACKGROUND OF THE DISCLOSURE

Within communications equipment cabinets, enclosures, and/or racks, cables and/or fibers are routed through various ports and/or channels in order to connect with the various communications equipment. Panels of these cabinets can provide access to optical fibers for setting up connections to the communications equipment and/or remote terminals within a network, for example. To facilitate management of the optical fibers, various racks, frames, shelves, chassis, modules, cassettes, adapters, splitters, couplers, and/or other fiber optic equipment may be installed within the communications equipment cabinets. Maximizing the number (e.g., density) of the optical fibers within the communications equipment cabinets may decrease the footprint of the cabinets. With so many optical fibers and excess lengths connecting to equipment, access to the equipment and/or optical fiber maintenance may be precarious. Moreover, the fiber optic equipment for managing the optical fibers may be complex and/or expensive to make, as well as frustrating to install or handle.

### BRIEF SUMMARY OF THE DISCLOSURE

In an optical network, fiber optic feeder or distribution cables are routed and connected to interconnection points and/or terminals (e.g., network access point enclosures, optical network terminals, network interface devices, etc.). At these connection or distribution points, fiber optic equipment enclosures, such as equipment racks or cabinets, are provided to house the connection of the fiber optic cable to fiber optic equipment installed therein. During maintenance and/or initial setup, installation personnel (e.g., installers) may equip the communications equipment enclosure with a variety of complex fiber optic communications equipment (e.g., modules, cassettes, adapters, splitters, couplers, splice trays, and/or other fiber optic equipment), and then feed a length of fiber optic cable into the enclosure, route the cable through the enclosure, and/or connect the cable to the fiber optic communications equipment. The fiber optic equipment may require specialized tools, time, and care to access the dense areas of the equipment rack or cabinet.

Depending on the needs of the connection point, the communications equipment enclosure may include a variety of fiber optic communications equipment (e.g., modules, cassettes, adapters, splitters, couplers, splice trays, and/or other fiber optic connections). Each of these connection operations (e.g., splitting, splicing, joining) typically includes specially adapted communications equipment directed to that specific purpose. Thus, real estate for the specialized fiber optics equipment within the communications equipment enclosure is at a premium, and the arrangement of the fibers being routed to the various specialized equipment may become tangled and/or dense, making it difficult for authorized personnel to have enough room to freely work without delays. These issues may be further exacerbated by the ever increasing fiber optic density demands within these communication equipment enclosures.

Embodiments of the present disclosure provide for various splitter and splice tray assemblies that cure many of the above noted defects and difficulties. In this regard, various embodiments of the present disclosure provide a simple, effective way to install the communications equipment onto an equipment rack or cabinet. Further, various embodiments of the disclosed tray assemblies provide for increased cable and/or fiber density for the equipment rack or cabinet, while maintaining finger room and organized access. Thus, communications equipment racks, cabinets, housings, and/or other enclosures may have a decreased footprint. The tray assembly may be double-sided to include both a top and bottom side for doubling the supported fiber optic density. The dual side of the disclosed tray assemblies may each include a variety of operations (e.g., a splice section, a splitter holding section, a fiber management section) for a number of cables and may be customized to standard tasks organized on discrete reversible sides-thereby offering versatility without requiring additional space. Moreover, no tools are required to install the tray assembly onto the equipment rack. For example, in some embodiments, the tray assembly may simply be aligned and rotatably engaged to achieve securement in the communications equipment rack or cabinet. Multiple assemblies may be utilized in one cabinet or enclosure.

In one exemplary embodiment, a splitter and splice tray assembly is provided. The splitter and splice tray assembly may include a tray and a toolless attachment feature for mounting the tray to an equipment rack. The tray may include a top side, a bottom side, a front panel, and a rear side with a splitter holding section. The top side and the bottom side may each include a splice section, a patching section, an input cable fixing section, and at least one fiber management section. Optionally a splice tray assembly may be provided without the splitter and without requiring the splitter holding section.

In some embodiments, the top side and the bottom side may be symmetrical about a center plane normal to the front panel.

In some embodiments, the toolless attachment feature may be configured to allow the tray to swivel about a vertical rail of the equipment rack.

In some embodiments, the splitter and splice tray assembly may further include a locking feature. The locking feature may be configured to engage slots formed in an opposing vertical rail of the equipment rack.

In some embodiments, the toolless attachment feature may include prongs configured to engage with slots formed in a vertical rail of the equipment rack. The prongs may be C-shaped. The prongs may include a vertical opening configured to accept a portion of the vertical rail. The prongs may be configured to allow the tray to swivel about the vertical rail of the equipment rack. The toolless attachment feature may include a stop feature. The stop feature may be configured to prevent the prongs from disengaging from the slots of the vertical rail while swiveling.

In some embodiments, the toolless attachment feature may be integral with the tray. The tray may be an integrally molded plastic part.

In some embodiments, the splitter and splice tray assembly may further include a pigtail cable assembly. The pigtail cable assembly may be configured for splicing and attached to the front panel.

In some embodiments, the splitter and splice tray assembly may further include a cover for protecting at least a portion of the top side of the tray.

In another exemplary embodiment, a communications equipment assembly is provided. The communications equipment assembly may include a communications equipment enclosure, a tray installed in the communications equipment enclosure, and a toolless attachment feature. The toolless attachment feature may connect the tray to an equipment rack inside the communications equipment enclosure. The toolless attachment feature may allow the tray to swivel about a vertical rail of the equipment rack. The tray may include a top side, a bottom side, a front panel, and a rear side with a splitter holding section. The top side and the bottom side may each include a splice tray and at least one fiber management section. The splice tray may include splice channels.

In some embodiments, the top side and the bottom side are symmetrical about a center plane normal to the front panel.

In some embodiments, the communications equipment assembly may further include a locking feature. The locking feature may be configured to engage slots formed in an opposing vertical rail of the equipment rack.

In some embodiments, the communications equipment assembly may further include a pigtail cable assembly. The pigtail cable assembly may include a plurality of fiber optic connectors attached to the front panel.

In some embodiments, the communications equipment assembly may further include a cover for protecting at least a portion of the top side of the tray.

In yet another exemplary embodiment, a tray assembly is provided. The tray assembly may include a tray configured to be disposed in an equipment rack. The tray may include a top side, a bottom side, a front panel, and a rear side with a splitter holding section. The top side and the bottom side may each include a splice tray and at least one fiber management section. The splice tray may include splice channels. The top side and the bottom side may be symmetrical about a center plane normal to the front panel.

In some embodiments, the tray assembly may further include a toolless attachment feature for mounting the tray to the equipment rack.

Additional features and advantages will be set forth in the detailed description which follows, and in part will be readily apparent to those skilled in the art from the description or recognized by practicing the embodiments as described in the written description and claims hereof, as well as the appended drawings.

It is to be understood that both the foregoing general description and the following detailed description are merely exemplary and are intended to provide an overview or framework to understand the nature and character of the claims.

### BRIEF DESCRIPTION OF THE DRAWINGS

The accompanying drawings are included to provide a further understanding and are incorporated in and constitute a part of this specification. The drawings illustrate one or more embodiments, and together with the description serve to explain principles and operation of the various embodiments.

Having thus described embodiments of the present disclosure in general terms, reference will now be made to the accompanying drawings, which are not necessarily drawn to scale, and wherein:
FIG. 1 illustrates example tray assemblies installed onto an equipment rack including a set of vertical rails, in accordance with some embodiments discussed herein;
FIG. 2 is a front-top-right isometric view of an example tray assembly, in accordance with some embodiments discussed herein;
FIG. 3 is a rear-bottom-right isometric view of the example tray assembly of FIG. 2, in accordance with some embodiments discussed herein;
FIG. 4 is a front elevational view of the example tray assembly of FIGS. 2-3, in accordance with some embodiments discussed herein;
FIG. 5 is a rear elevational view of the example tray assembly of FIGS. 2-4, in accordance with some embodiments discussed herein;
FIG. 6 is a left side elevational view of the example tray assembly of FIGS. 2-5, in accordance with some embodiments discussed herein;
FIG. 7 is a right side elevational view of the example tray assembly of FIGS. 2-6, in accordance with some embodiments discussed herein;
FIG. 8 is a top plan view of the example tray assembly of FIGS. 2-7, in accordance with some embodiments discussed herein; and
FIG. 9 is a bottom plan view of the example tray assembly of FIGS. 2-8, in accordance with some embodiments discussed herein.
FIG. 10 shows a top side of an example tray assembly with an optical fiber distribution cable and a pigtail cable assembly arranged within, in accordance with some embodiments discussed herein;
FIG. 11 shows a bottom side of an example tray assembly with optical fibers issuing from a splitter, in accordance with some embodiments discussed herein;
FIG. 12 shows an isometric view of a rear side of an example tray assembly featuring a splitter holding section with a splitter installed therein, in accordance with some embodiments discussed herein;
FIG. 13 is an isometric view of a front panel of an example tray assembly featuring a patching section and a splice section with a cover, in accordance with some embodiments discussed herein;
FIG. 14 illustrates aligning a toolless attachment feature of an example tray assembly with a vertical rail of an equipment rack, in accordance with some embodiments discussed herein;
FIG. 15 illustrates prongs of the toolless attachment feature of the example tray assembly of FIG. 14 engaging slots formed in the vertical rail of the equipment rack, in accordance with some embodiments discussed herein;
FIG. 16 illustrates swiveling the example tray assembly of FIGS. 14-15 about the vertical rail of the equipment rack, in accordance with some embodiments discussed herein;
FIG. 17 illustrates a locking feature of the example tray assembly of FIGS. 14-16 engaging slots formed in an opposing vertical rail of the equipment rack, in accordance with some embodiments discussed herein; and
FIG. 18 is a flowchart detailing an example method of installing an example tray assembly, in accordance with some embodiments discussed herein.

### DETAILED DESCRIPTION

Exemplary embodiments of the present disclosure will be described more fully hereinafter with reference to the accompanying drawings, in which some, but not all embodiments of the present disclosure are shown. Indeed, the present disclosure may be embodied in many different forms and should not be construed as limited to the exemplary embodiments set forth herein; rather, these embodiments are provided so that this disclosure will satisfy applicable legal requirements. Like reference numerals refer to like elements throughout.

Assemblies and systems according to the present disclosure allow an installer to configure cables and/or other communications equipment in an improved manner, such as by enabling the installer to organize and perform various operations on cables using one or more tray assemblies that are easily installed in a communications equipment enclosure without the need for special tools. In this regard, in some embodiments, example tray assemblies may provide splicing, splitting, joining, and/or fiber management operations for the cables and/or the communications equipment at the point of connection.

Additionally, the presently described tray assemblies may provide improved compliance by offering a simple, toolless method of installing fiber optics equipment for performing various operations on cables and/or fibers within the interior of communications equipment enclosures. This can provide the desired connectivity as well as protect the integrity of the entire network.

Further, the presently described assemblies and systems incorporate simple management and organization of the various operations sections into their design. The precise and consistent grouping of cables in the various sections of the tray assembly allows the installer to order the cables in a kempt matter. The arrangement of cables in the tray assembly avoids cluttering the enclosures and/or tangling of the cables. In addition, the presently described tray assemblies may facilitate both unfettered airflow and ease of access. Authorized personnel may also make changes to the communications equipment setup relatively easily, such as without breaking or removing any additional parts (as may otherwise be required with wraps or zip-ties). Similarly, the tray assemblies may be secured and unsecured easily without tools. Further, due to access into the interior spaces of the two sides of the tray assembly where the cable is secured, the cables can be easily unsecured and swapped out/moved from the interior space without damage.

Due in part to its extremely wide bandwidth and low noise operation, optical fiber is increasingly being used for a variety of applications, including but not limited to broadband voice, video, and data transmission. Fiber optic communications networks may include a number of interconnection points (such as at which multiple optical fibers are interconnected) and/or connection terminals (e.g., network access point (NAP) enclosures, optical network terminals (ONTs), network interface devices (NIDs)). Connection terminals may include ports and be used to establish connections between optical fibers terminated from the distribution cable and respective optical fibers of drop cables, extended distribution cables, tether cables, and/or branch cables.

The connection terminals may be used to extend fiber optic communications services to a subscriber. In this regard, fiber optic networks may deliver "fiber-to-the-curb" (FTTC), "fiber-to-the-business" (FTTB), "fiber-to-the-home" (FTTH) and "fiber-to-the-premises" (FTTP), referred to generically as "FTTx". For example, delivering services to subscribers in the last mile connection may occur indoors. Different kinds of buildings may require complicated cabling systems, which can include many separated cables, each one connecting one subscriber. Installation may include making each of the many separated cables connect between a main distribution point *(e.g.,* in the basement or elsewhere in the building) and the end user. Each connection may require a different length of cable, so variations in cable tensions and routing may introduce further tangling or complexities into what may be an already crowded enclosure. Moreover, modifications after initial installation may be required *(e.g.,* due to building or subscriber changes), requiring the installer to re-enter the enclosure and quickly make adjustments to cables or fibers within.

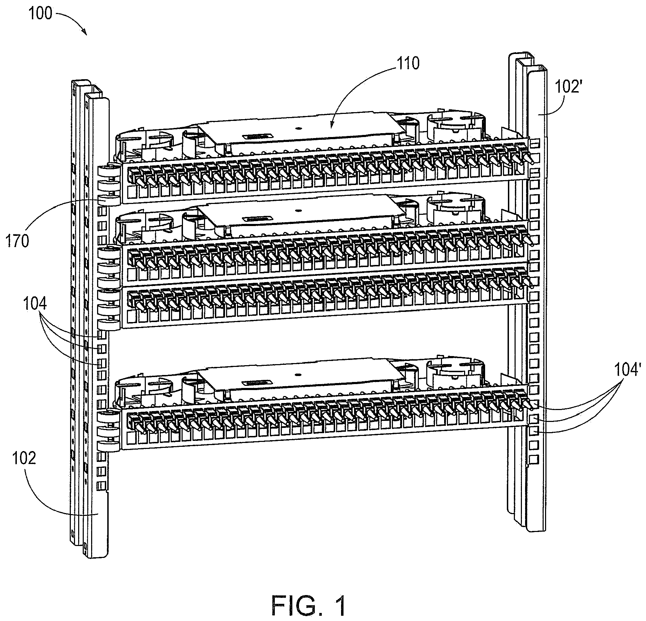

FIG. 1 illustrates an example equipment enclosure, here an equipment rack 100, which may be installed in a datacenter or within a communications equipment cabinet. The equipment rack 100 may include a set of vertical rails 102, 102' for mounting various communications equipment (e.g., a plurality of fiber optic tray assemblies 110). The vertical rails 102, 102' may include slots 104, 104' formed therein (e.g., according to an Electronic Industries Alliance (EIA) standard). The equipment rack 100 may further include routing channels and/or hubs for carrying and/or offsetting the weight of a cable. In some embodiments, such features may be used to ensure a suitable bend curvature *(e.g.,* with radius of curvature greater than 25 mm or other suitable curvature based on the cable type and/or diameter) as the cable is conveyed through the equipment rack 100 to connect to the communications equipment.

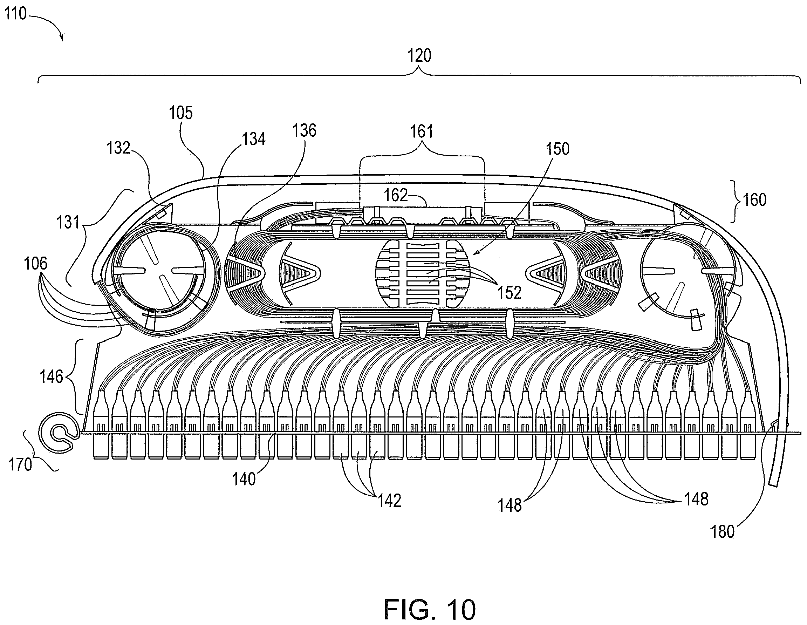

As shown in FIG. 1, an example tray assembly 110 may be used to manage cables and/or fibers (e.g., splice, split) in various organized sections, discussed in more detail below. The tray assembly 110 may be configured such that multiple tray assemblies 110 may be attached to the equipment rack 100 for securing multiple cables or fibers. For example, a distribution or other multi-fiber cable may be unbundled into multiple individual cables or fibers. The multi-fiber cable and the individual optical fibers contained therein may be secured, arranged, and connected to various adapters using the tray assemblies 110 installed in the equipment rack 100 and then further routed through the equipment rack 100 *(e.g.,* to connect with cables and/or fibers exiting in the communications equipment enclosure). With reference to FIGS. 10-13, the tray assembly 110 may include a top side 120, a bottom side 130, a front panel 140, a rear side 160, and a toolless attachment feature 170, as described in more detail herein.

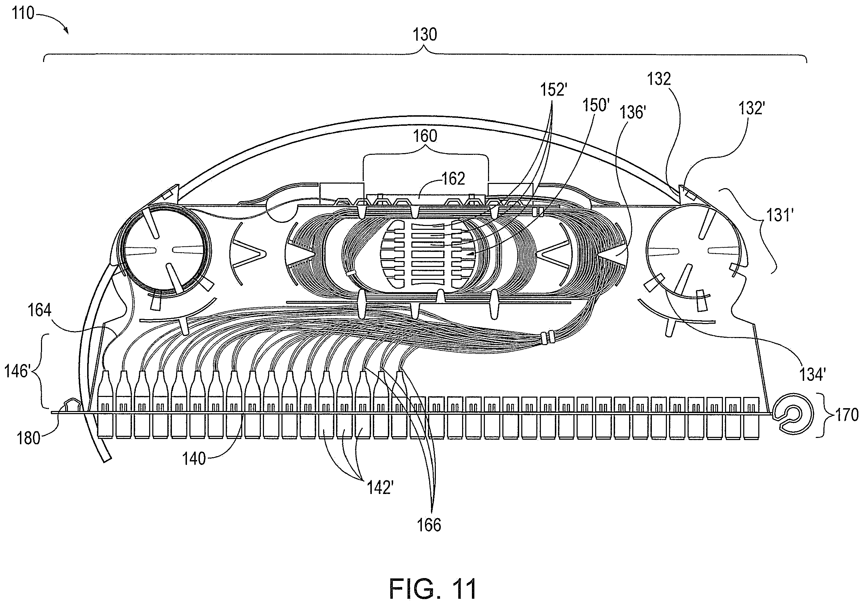

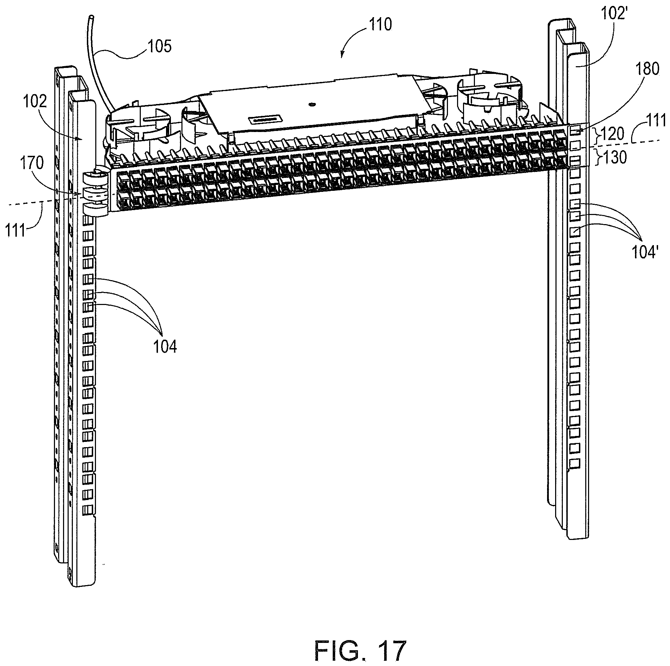

The toolless attachment feature 170 of the tray assembly 110 may significantly improve the installation process of the tray assembly 110 into the equipment rack 100. Installation personnel may fix and secure the tray assembly 110 to the equipment rack 100 without the need for screws, tools, or other additional components, thus saving time and frustration. Further, in some embodiments, the toolless attachment feature 170 may enable removal of the tray assembly 110, such as for maintenance or repositioning. In some embodiments, the toolless attachment feature 170 may be integral with the tray assembly 110. As discussed in further detail in reference to FIGS. 11 and 17, the tray assembly 110 may also include one or more toolless components (e.g., locking features 180) for attachment of the tray assembly 110 to the equipment rack 100 on a side opposite the toolless attachment feature 170. The locking features 180 may include a push/pull plunger, a squeeze tab, and/or a clip, for example.

Including two sides (e.g., top side 120 and bottom side 130) for the tray assembly 110 may increase the number (e.g., density) of cables and/or fibers within the equipment rack 100, communications equipment cabinet, and/or other enclosure. For example, in some embodiments, the tray assembly 110 may be configured to be installed on a 19" rack and support a fiber optic density of at least 72 fiber optic connections per U space within the equipment rack 100, based on using standard connector (SC) adapters. In this way, the same tray assembly 110 may support a fiber optic density of at least 144 LC adapters and even 432 mini duplex connector (MDC) adapters.

The double layers of the tray assembly 110 may allow for clear functional areas or sections segregated to each side. For example, the bottom side 130 may include optical fiber cables undergoing a splitting operation, while the top side 120 is reserved for splicing operations. In this way, the tray assembly 110 may function as a splitter and splice tray in one single piece of equipment. In some embodiments, the tray assembly 110 may be an integrally molded plastic part. In some embodiments, the tray portion of the tray assembly 110 may be a monolithic integrally molded part. Alternatively, the tray portion of the tray assembly 110 may be multiple parts. For example, the top side 120 and the bottom side 130 may be two identical parts joined together at a center seam.

Moreover, in some embodiments, the dual sides of the tray assembly 110 may feature at least some reversibility. In some embodiments, the equipment rack 100 may be configured with a distribution cable routed in from the left side to connect with communications equipment installed therein (as shown in FIG. 17). In other embodiments, the equipment rack 100 may be configured with a cable routed in from the right side. The tray assemblies 110 may be dual sided and/or reversible such that a top side and/or a bottom side that is already configured with equipment (e.g., a pigtail cable assembly) can be flipped to accommodate a distribution cable routed in through the equipment rack 100 from any direction. In some embodiments, both sides of the tray assembly 110 may be configured to be similar or even identical. In other embodiments, both sides of the tray assembly 110 each feature the same components, but in a different arrangement.

The tray assemblies 110 may be configured to stack and/or nest adjacent to one another to allow for building out in a modular grid sized to accommodate any number of cables and/or other communications equipment installed onto the equipment rack 100. Other configurations are possible, such as with more narrow or graduated width tray assemblies 110 such that the tray assemblies are offset from one another to allow additional finger or hand access, for example. In some embodiments, the tray assemblies 110 may be attached to or incorporated with the routing channels and/or hubs built-in to the equipment rack 100 and/or communications equipment cabinet.

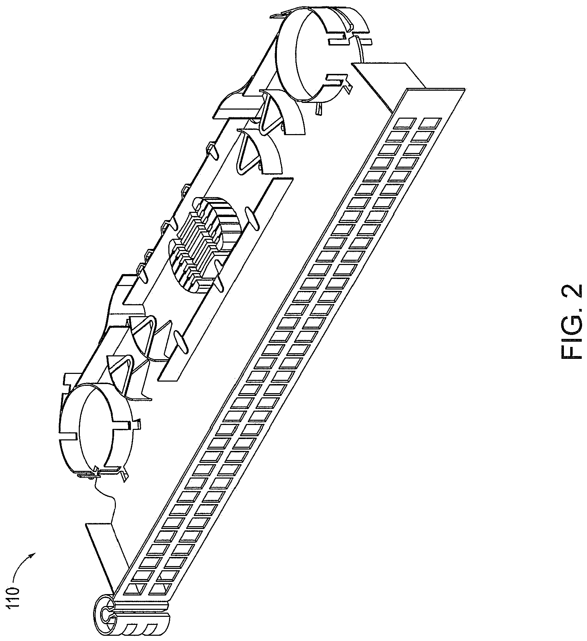

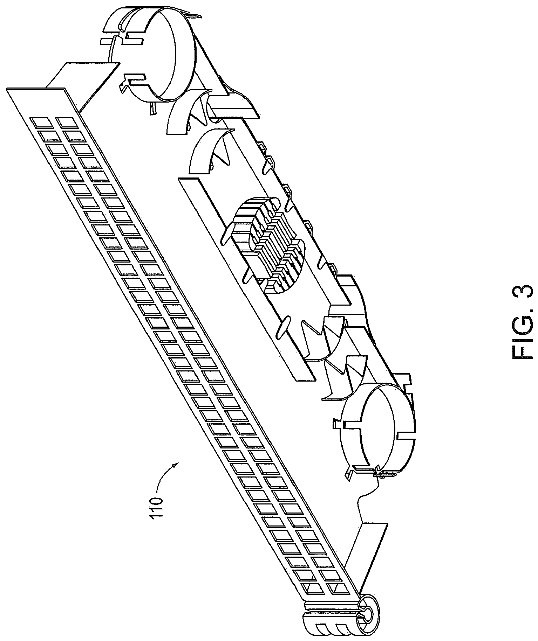

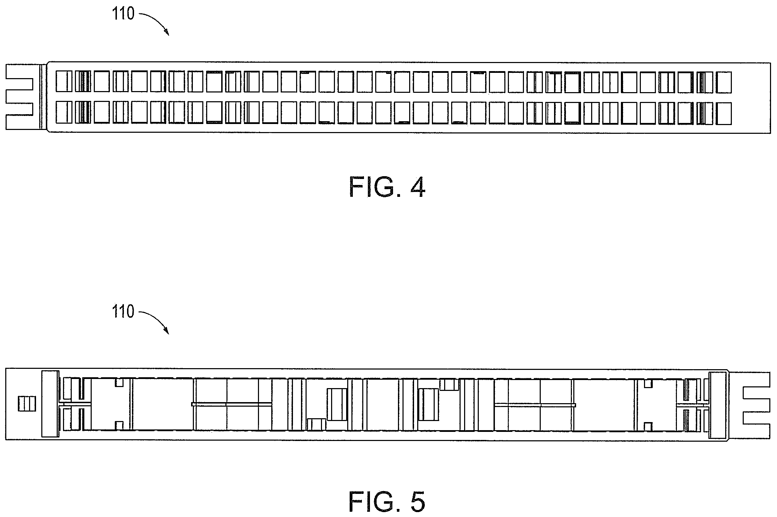

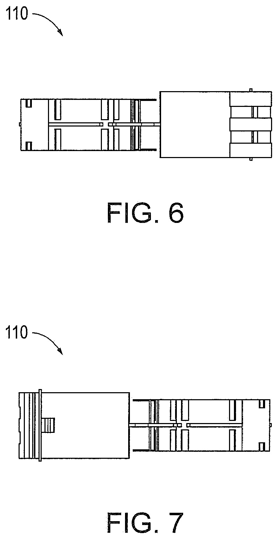

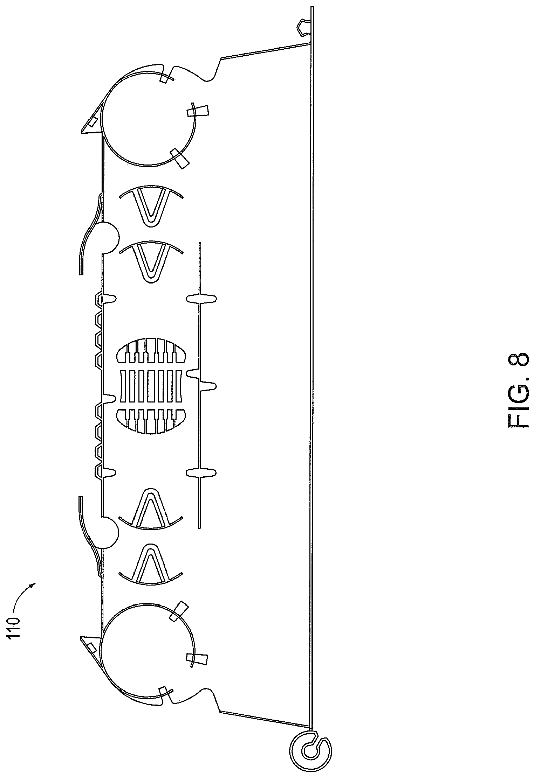

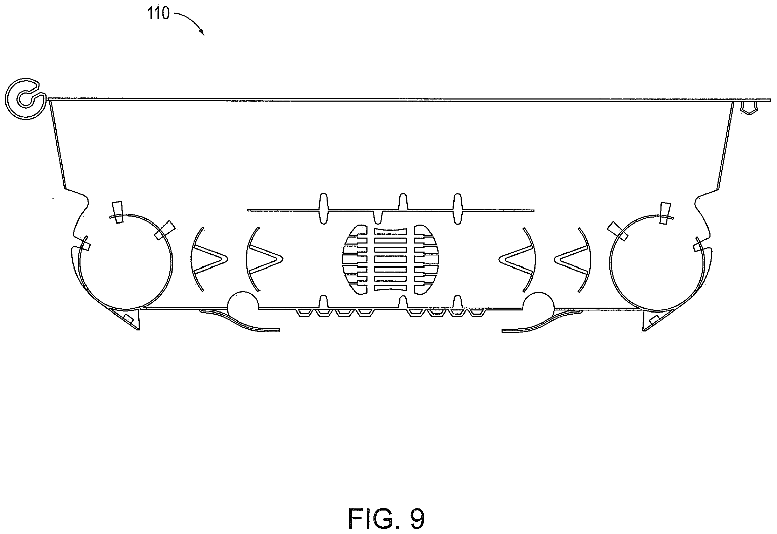

FIGS. 2-9 provide various views of the example tray assembly 110 shown and described with respect to FIG. 1 and other various figures herein.

FIG. 10 illustrates an example top side 120 of an example tray assembly 110. The top side 120 may include one or more fiber management sections 131 for storing and/or arranging excess cable or fiber 106. The fiber management sections 131 may include a guide or fixing feature section 132 for a distribution, feeder, or other input cable 105, an outer spiral hub 134, and an inner elliptical hub 136 for preventing damage and/or signal loss in the optical fibers 106. In this way, the signal strength of the cables and/or fibers may avoid loss or deterioration (e.g., attenuation may be below 0.2 dB while being optically monitored).

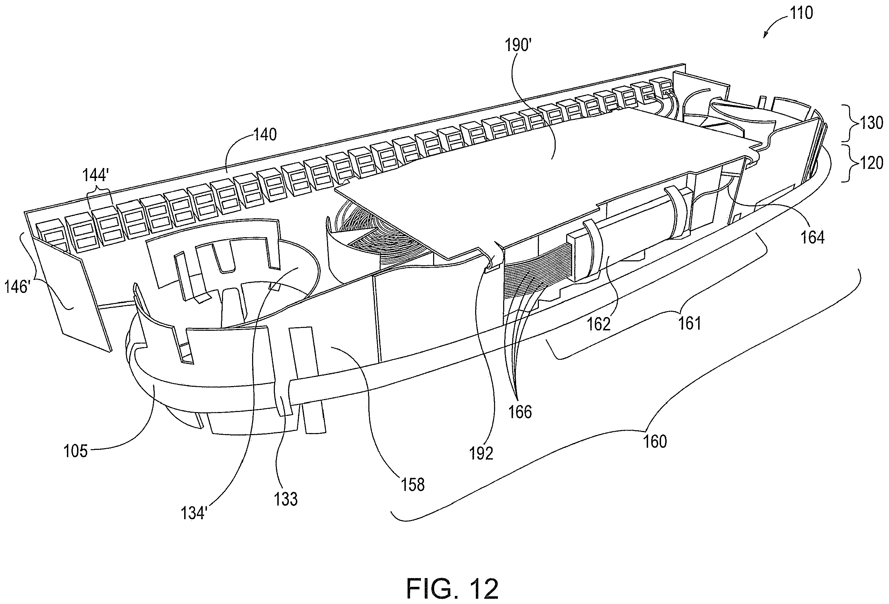

Although the depicted embodiment illustrates two outer spiral hubs 134 and one inner elliptical hub 136 as part of the fiber management section 131, in some embodiments, any number of hubs or other corresponding features/components may be provided within the top side 120 of the tray assembly 110. For example, the tray assembly 110 may only have one outer spiral hub 134 and corresponding features/components. Alternatively, the tray assembly 110 may have a plurality of fiber management sections 131 and corresponding features/components *(e.g.,* fiber nests, radius limiters). The guide or fixing feature section 132 may include tabs, clips, or other features for retaining incoming cables and/or coiled fibers in protected and organized arrangements. For example, FIG. 12 shows a tab 133 of the guide or fixing feature section 132 holding the input cable 105 in place as the input cable 105 is routed into the tray assembly 110 from the communications equipment cabinet. In some embodiments, the tray assembly 110 may include routing channels and/or openings for guiding fibers within the tray assembly 110 between the different sections.

The top side 120 may include a splice section 150 for arranging splicing operations between optical fibers. The splice section 150 may include a splice tray with splice channels 152. In some instances, installation personnel may utilize the splice section 150 to splice multiple individual in-ground/distribution cables to a passive optical network (PON) cabinet, for example. The installation personnel may utilize a standard splicing methodology to ensure a quality burn.

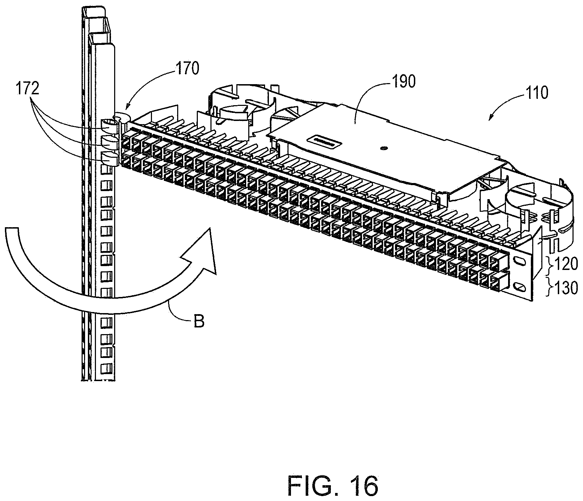

The top side 120 may further include a cover 190 (as shown in FIG. 16) protecting a portion of or the entire top side 120, such as from dust, debris, and/or other unwanted external phenomena. The tray assembly 110 and/or cover 190 may be formed from a material that is clear or at least partially transmissive of a desired wavelength or range of wavelengths usable for identifying problems (e.g., cracks, fractures, breaks, or other unacceptable conditions) with the fibers.

The top side 120 may include a patching section 146 for connecting fiber optic connectors 148 to adapters 142 installed on the front panel 140 of the tray assembly 110. The tray assembly 110 may have the fiber optic connectors 148 and corresponding fibers preinstalled in a pigtail cable assembly configured for easily splicing the preinstalled fibers with incoming fibers 106 in the splice section 150. The preinstalled fibers of the pigtail cable assembly may be pre-terminated and provided with excess lengths (*e.g*., stored around the inner elliptical hub 136). The input cable 105 may be an outside plant or intra-facility cable with a buffer tube or subunit of multiple (*e.g.*, 12) fibers broken-out from an overall jacket, for example. The broken-out fibers 106 of the input cable 105 may then be spliced to the fibers of the preinstalled, pre-terminated pigtail cable assembly in the splice section 150. Preinstalled components and/or sections of the tray assembly 110 may be color coded to aid in identification.

In some embodiments, the fibers 106 may be routed from the outer spiral hub 134 to the inner elliptical hub 136. Extra lengths of the fibers 106 may be wrapped around the inner elliptical hub 136 and then routed to the splice channels 152 of the splice section 150. Each of the splice channels 152 may provide a space to retain one or more splicing tubes. The splicing tube may be made of steel, for example, for protecting a fragile splice point, at which two fibers are spliced together. In some instances, the splicing tube may be encapsulated by heat shrink (*e.g.*, for protection from moisture). The installation personnel may then press the splicing tube down into one of the splice channels 152. The splice channels 152 may be arranged in the splice section 150 to allow finger access to installed splicing tubes to allow easy removal of the splicing tubes from the splice channels 152 (*e.g.*, for maintenance).

The front panel 140 of the tray assembly 110 may extend or connect to a toolless attachment feature 170 and/or a locking feature 180, discussed in further detail herein.

The rear side 160 of the tray assembly 110 may include a splitter holding section 161 for arranging one or more splitters 162 (*e.g.*, a 1x32 splitter) and/or splitter modules, as discussed in further detail herein.

FIG. 11 illustrates an example bottom side 130 of an example tray assembly 110. The bottom side 130 may include one or more fiber management sections 131' for storing and/or arranging excess cable or fiber. The fiber management sections 131' may include a guide or fixing feature section 132' for a distribution, feeder, or other input cable, an outer spiral hub 134', and an inner elliptical hub 136' for preventing damage and/or signal loss in the optical fiber cables. Although the depicted embodiment illustrates two outer spiral hubs 134' and one inner elliptical hub 136' as part of the fiber management section 131', in some embodiments, any number of hubs or other corresponding features/components may be provided within the bottom side 130 of the tray assembly 110. For example, the tray assembly 110 may only have one outer spiral hub 134' and corresponding features/components. Alternatively, the tray assembly 110 may have a plurality of fiber management sections 131' and corresponding features/components. In some embodiments, these various fiber operations (*e.g*., splicing, splitting, patching) management sections may be symmetrical between the top side 120 and bottom side 130.

Like the top side 120, the bottom side 130 may include a splice section 150' for arranging splicing operations between optical fibers. The splice section 150' may include a splice tray with splice channels 152'.

Like the top side 120, the bottom side 130 may include a patching section 146' for connecting optical fibers to adapters 142' installed on the front panel 140 of the tray assembly 110.

As shown in FIG. 11, the bottom side 130 may route an incoming fiber optic cable 164 through one or more of the fiber management sections 131' to the rear side 160 of the tray assembly 110. The incoming fiber optic cable 164 may be split out into fibers 166 using the splitter 162 in the splitter holding section 161. The fibers 166 may then be routed back through the inner elliptical hub 136' in another fiber management section 131' and return to the patching section 146' to connect with the fiber optic connection adapters 142' installed in the front panel 140 of the tray assembly 110. In some embodiments, the splitter 162 may be a passive or active optical splitting, coupling, or wavelength managing device (*e.g.*, a passive optical splitter, fused biconical taper coupler (FBT), wave length division multiplexer/demultiplexer (WDM), coarse wavelength division multiplexer/demultiplexer, dense wave division multiplexer/demultiplexer) used to divide incoming light signals in one fiber across multiple fibers.

In some embodiments, the splitter 162 and the corresponding fiber optic cable 164, fibers 166, connectors, and adapters 142' may be preinstalled in the tray assembly 110. In this way, the bottom side 130 of the tray assembly 110 may not need to be accessed, since the connections for splitting an incoming cable are already in place. For example, the tray assembly 110 may have two 1x32 splitters 162 preinstalled on the rear side 160 in the splitter holding section 161 as well as all of the corresponding cables and fibers pre-routed and arranged in a secure and organized manner.

Thus, the bottom side 130 of the tray assembly 110 provides splitting functionality-without any complex installation or maintenance access required-through access to the adapters 142' installed in the front panel 140, all while doubling the fiber density of the tray assembly 110 by storing this splitting feature on an underside of a tray instead of requiring its own separate tray or module elsewhere in the equipment rack 100.

FIG. 12 shows an isometric view of the bottom side 130 of the example tray assembly 110 from the rear side 160. As depicted, the bottom side 130 and top side 120 may be seen stacked atop one another. The input cable 105 may utilize the top side 120 section of the rear side 160 to be routed in for the splicing operations that may be relegated to the top side 120 of the tray assembly 110, for example, while the incoming fiber optic cable 164, splitter 162, and fibers 166 utilize the bottom side 130 of the rear side 160 for the splitting operations that may be likewise relegated to the bottom side 130 of the tray assembly 110. As shown in FIG. 12, a rear partition 158 may separate the splitter holding section 161 from the outer spiral hub 134' of the bottom side 130 of the tray assembly 110. In this regard, the rear partition 158 may be common for the top side 120 and the bottom side 130 of tray assembly 110.

The tray assembly 110 may further include a cover 190' over all or a portion of the bottom side 130. As shown in FIG. 12, the cover 190' may protect the splice section 150' of the bottom side 130 of the tray assembly 110. The cover 190' may be rotatably or otherwise attached to the rear side 160 of the tray assembly 110, such as via connections 192' (although other types of connections are contemplated).

FIG. 12 also shows a different view of the patching section 146' of the bottom side 130 of the example tray assembly 110. The connector adapters 142' may be included in apertures 144' formed in the front panel 140 of the tray assembly 110. The connector adapters 142' may be standard connector (SC) connectors (*e.g*., according to IEC 61754-4) or small form factor (SFF) connectors in simplex or duplex configuration, such as LC connectors (*e.g*., according to IEC 61754-20). Recently, several very-small form factor (VSFF) connectors have been introduced for pluggable transceiver applications, including MDC connectors offered by U.S. Conec, Ltd. (Hickory, NC), and SN connectors offered by Senko Advanced Components, Inc. (Marlborough, MA). These connectors are merely illustrative and other suitable connectors may also be used, as will be appreciated by persons skilled in optical connectivity. The apertures 144' may be configured to accommodate any suitable adapter type. In some embodiments, the apertures 144' of the front panel 140 may have adapters 142' (*e.g.*, input, output, pass-through) preinstalled. In some embodiments, the adapters 142' may be installed in or swapped out from the apertures 144' of the front panel 140 in the field by installation personnel.

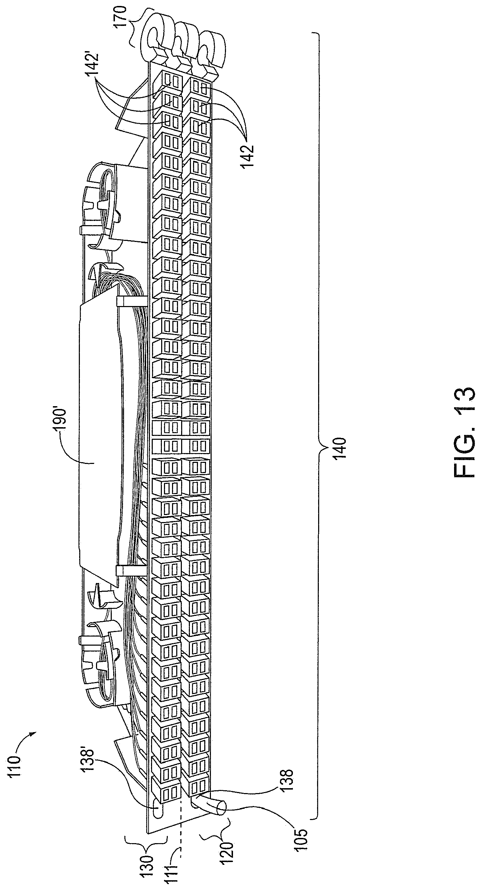

FIG. 13 shows an isometric view of the bottom side 130 of the example tray assembly 110 from the front. As depicted, the bottom side 130 and top side 120 may be seen stacked atop one another. In some embodiments, the top side 120 and the bottom side 130 may be substantially symmetrical about a center plane 111 that bisects the front panel 140 horizontally. In this way, installation personnel may be familiar with all the various sections (*e.g*., fiber management section 131, 131', splice section 150, 150') no matter which orientation (*e.g*., top side 120 facing up, top side 120 facing down) the tray assembly 110 is setup as in the equipment rack 100. Likewise, the tray assembly 110 may be installed with either side facing upwardly and still provide similar functionality, such as may be useful for dealing with various positions and/or orientations of incoming cables.

In some embodiments, the front panel 140 of the tray assembly 110 may extend or connect to a section including a guide feature 138 for securing the input cable 105 for the top side 120 of the tray assembly 110. In some embodiments, the section may include a guide feature 138' for securing another input cable 105, such as for the bottom side 130 of the tray assembly 110. In such an example, splicing functionality could be employed on both sides of the tray assembly 110 at the same time with different input cables. In other embodiments, the guide features 138, 138' may both be for securing or routing input cables for the top side 120.

As shown in FIG. 13, the bottom side 130 portion of the front panel 140 may include bottom fiber optic connector adapters 142', while the top side 120 portion of the front panel 140 includes top fiber optic connector adapters 142. The top fiber optic connector adapters 142 may be the same as the bottom fiber optic connector adapters 142'. Additionally or alternatively, all or some of the top fiber optic connector adapters 142 may be a different type of fiber optic connector from the bottom fiber optic connector adapters 142'. In some embodiments, one or more of the top fiber optic connector adapters 142 may include different types of fiber optic connectors. Likewise, one or more of the bottom fiber optic connector adapters 142' may also include different types of fiber optic connectors.

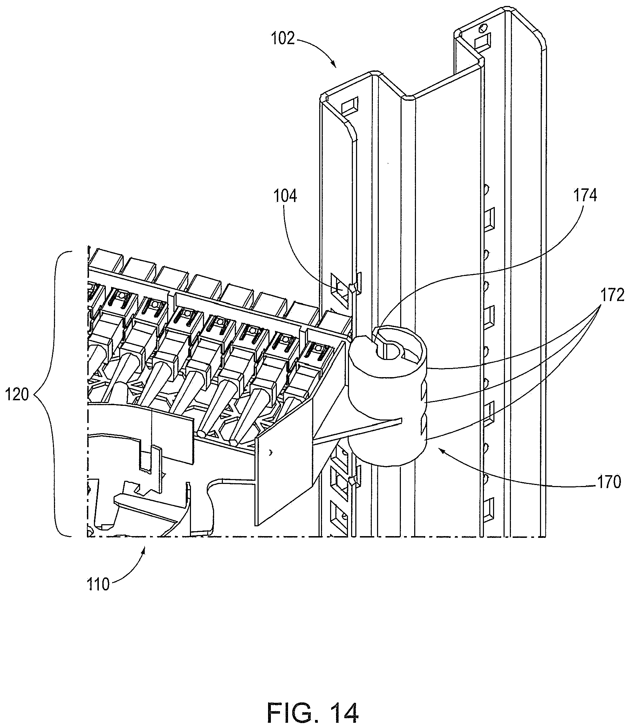

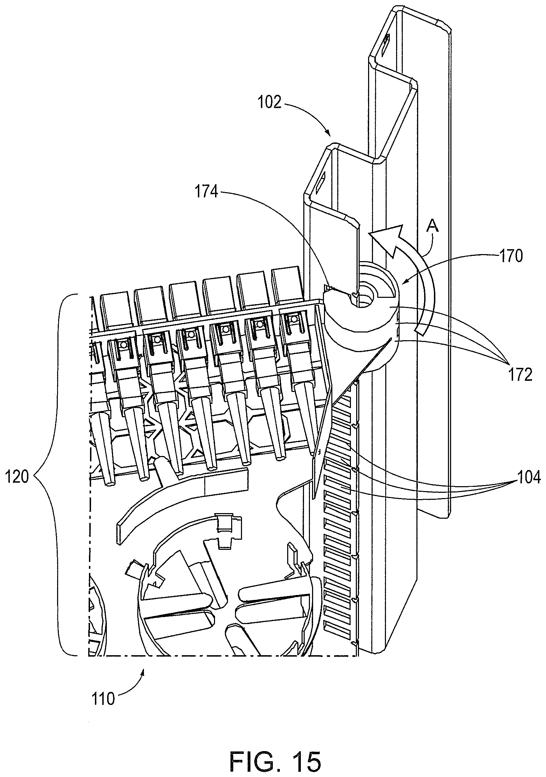

The toolless attachment feature 170 of the tray assembly 110 may be configured to allow the tray assembly 110 to swivel about a vertical rail 102 of the equipment rack 100. For example, as shown in FIG. 14, the toolless attachment feature 170 of the tray assembly 110 may include C-shaped prongs 172 configured to engage with slots 104 formed in the vertical rail 102 of the equipment rack 100. A vertical opening 174 of the prongs 172 may be aligned with the vertical rail 102, and the tray assembly 110 may be moved laterally, accepting a portion of the vertical rail 102 therein, until the prongs 172 are aligned with the slots 104 of the vertical rail 102. Simply rotating the tray assembly 110 to insert the prongs 172 of the toolless attachment feature 170 into the cooperating slots 104 of the vertical rail 102 (such as along arrow A) may install the tray assembly 110 onto the equipment rack 100, as shown in FIG. 15. The swiveling movement capabilities of the tray assembly 110 about the vertical rail 102 of the equipment rack 100 may be seen in FIG. 16. For example, an installer may then swivel (*e.g*., rotate) the tray assembly 110, such as about arrow B shown in FIG. 16. Other swiveling arrangements are possible.

In some embodiments, the toolless attachment feature 170 may include a stop feature configured to prevent the prongs 172 from disengaging from the slots 104 while swiveling about the vertical rail 102. For example, the prongs 172 may include a protrusion that limits rotation of the toolless attachment feature with respect to the slots 104. The protrusion may necessitate the lifting of the tray assembly 110 to enable rotation to a position in which the toolless attachment feature 170 may be removed from the slots 104, such as the position depicted in FIG. 14. In some embodiments, the stop feature may be a spring loaded part that is biased to close the vertical opening 174 in the gap of the C-shaped prongs 172.

FIGS. 16-17 show how the tray assembly 110 may be swiveled around the vertical rail 102 of the equipment rack 100 all the way until the tray assembly 110 meets an opposing vertical rail 102' of the equipment rack 100. The tray assembly 110 may include a locking feature 180 on the opposite end of the front panel 140 from the toolless attachment feature 170 (*e.g.*, an example locking feature 180 is shown in FIG. 11). In some embodiments, the locking feature 180 may be configured to engage with slots 104' formed in the opposing vertical rail 102' of the equipment rack 100. For example, the locking feature 180 may include a releasable plastic clip that snaps the tray assembly 110 into a secure fit with the equipment rack 100. The locking feature 180 may include tabs or other easily adjusted features that may be squeezed to release the secure engagement of the locking feature 180 with the slots 104' of the opposing vertical rail 102'. In some embodiments, one or more handles may be positioned on the front panel 140 to enable an installer to disengage the locking feature 180. Additionally or alternatively, the locking feature 180 may include a push/pull plunger, a squeeze tab, and/or a clip that may serve as both a handle and a locking mechanism.

With the locking feature 180 disengaged, the tray assembly 110 may then be swiveled back out about the vertical rail 102. In some embodiments, the locking feature 180 may be holes or other features configured to align with the slots 104' of the opposing vertical rail 102'. As such, a screw, a ball lock pin, a zip tie or other fastener may be communicated through both openings and secured. In some embodiments, the locking feature 180 may include magnets, Velcro, a latch, tack, a friction hold, or any other fastener for engaging the opposing vertical rail 102' of the equipment rack 100. In some embodiments, the locking feature 180 may be a passive component that cooperates with a fastener arranged on the opposing vertical rail 102' of the equipment rack 100. In other embodiments, the locking feature 180 may include a combination of components on both the tray assembly 110 and the opposing vertical rail 102'.

### Example Flowcharts)

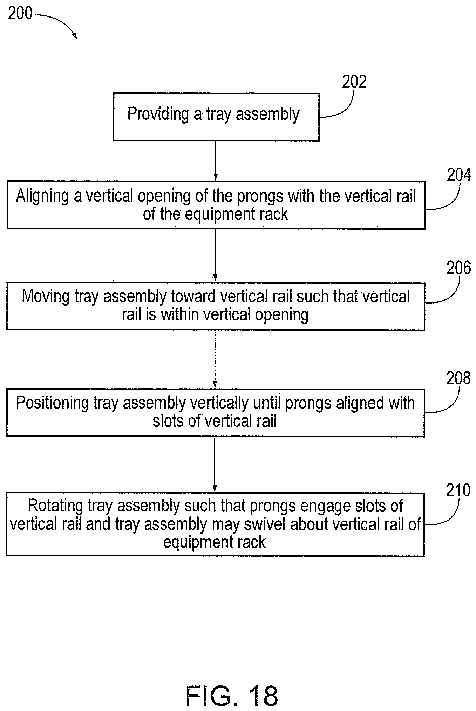

Embodiments of the present disclosure provide various methods for installing a tray assembly onto an equipment rack, such as described herein. Various examples of the operations performed in accordance with some embodiments of the present disclosure will now be provided with reference to FIG. 18.

FIG. 18 illustrates a flowchart according to an example method 200 of installing a tray assembly onto an equipment rack according to an example embodiment. The method 200 may include providing the example tray assembly 110 (as described herein) at operation 202. At operation 204, the method comprises aligning the vertical opening of the prongs with the vertical rail of the equipment rack, as described herein. At operation 206, the method comprises moving the tray assembly toward the vertical rail such that the vertical rail is within the vertical opening of the prongs. At operation 208, the method comprises positioning the tray assembly vertically until the prongs align with the slots formed in the vertical rail. At operation 210, the method comprises rotating the tray assembly such that the prongs engage the slots of the vertical rail and the tray assembly may swivel about the vertical rail of the equipment rack.

Removing the tray assembly from the equipment rack may be as simple as rotating or swiveling the tray assembly away from the opposing vertical rail. In some embodiments, the tray assembly may further include a locking feature. Thus, the method may further comprise engaging the locking feature with the opposing vertical rail such that the tray assembly is in an engagement position, in which the tray assembly is secured to the equipment rack.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

### Conclusion

Many modifications and other embodiments of the disclosures set forth herein will come to mind to one skilled in the art to which these present disclosures pertain having the benefit of the teachings presented in the foregoing descriptions and the associated drawings. Therefore, it is to be understood that the embodiments of the present disclosure are not to be limited to the specific embodiments disclosed and that modifications and other embodiments are intended to be included within the scope of the present disclosure. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the present disclosure. In this regard, for example, different combinations of elements and/or functions than those explicitly described above are also contemplated within the scope of the present disclosure. Although specific terms are employed herein, they are used in a generic and descriptive sense only and not for purposes of limitation.

## Claims

1. A splitter and splice tray assembly comprising:
a tray including:
a top side,
a bottom side,
a front panel, and
a rear side with a splitter holding section,
wherein the top side and the bottom side each include:
a splice section,
a patching section,
an input cable fixing section, and
at least one fiber management section; and
a toolless attachment feature for mounting the tray to an equipment rack.

2. The splitter and splice tray assembly of claim 1, wherein the top side and the bottom side are symmetrical about a center plane normal to the front panel.

3. The splitter and splice tray assembly of claim 1 or 2, wherein the toolless attachment feature is configured to allow the tray to swivel about a vertical rail of the equipment rack.

4. The splitter and splice tray assembly of claim 3, further comprising a locking feature configured to engage slots formed in an opposing vertical rail of the equipment rack.

5. The splitter and splice tray assembly of any of claims 1-4, wherein the toolless attachment feature includes prongs configured to engage with slots formed in a vertical rail of the equipment rack.

6. The splitter and splice tray assembly of claim 5, wherein the prongs are C-shaped.

7. The splitter and splice tray assembly of claim 5, wherein the prongs comprise a vertical opening configured to accept a portion of the vertical rail.

8. The splitter and splice tray assembly of claim 5, wherein the prongs are configured to allow the tray to swivel about the vertical rail of the equipment rack.

9. The splitter and splice tray assembly of claim 8, wherein the toolless attachment feature includes a stop feature configured to prevent the prongs from disengaging from the slots of the vertical rail while swiveling.

10. The splitter and splice tray assembly of any of claims 1-9, wherein the toolless attachment feature is integral with the tray.

11. The splitter and splice tray assembly of any of claims 1-10, wherein the tray is an integrally molded plastic part.

12. The splitter and splice tray assembly of any of claims 1-11, further comprising a pigtail cable assembly configured for splicing, wherein the pigtail cable assembly is attached to the front panel.

13. The splitter and splice tray assembly of any of claims 1-12, further comprising a cover for protecting at least a portion of the top side of the tray.
